Europäisches Patentamt

European Patent Office

Office européen des brevets

(19)

(11) Veröffentlichungsnummer: **0 101 753**
**A1**

(12) # EUROPÄISCHE PATENTANMELDUNG

(21) Anmeldenummer: 82107839.1

(22) Anmeldetag: 26.08.82

(51) Int. Cl.³: **B 29 F 3/02**
B 29 F 3/01, B 29 B 1/10
B 30 B 11/22, F 16 L 23/00

(43) Veröffentlichungstag der Anmeldung:
07.03.84 Patentblatt 84/10

(84) Benannte Vertragsstaaten:
AT BE CH DE FR GB IT LI LU NL SE

(71) Anmelder: HERMANN BERSTORFF Maschinenbau
GmbH
An der Breiten Wiese 3/5
D-3000 Hannover 61(DE)

(72) Erfinder: Schaeffer, Hans-Joachim
Birkenstrasse 8
D-3014 Laatzen 1(DE)

(72) Erfinder: Syrbius, Gerhard, Dr.
Erdbrandweg 4
D-3006 Grossburgwedel(DE)

(54) Zylinderflanschverbindung für Schneckenpressen.

(57) Es wird eine Zylinderflanschverbindung offenbart, die ohne jegliche Verschweißung montiert und sehr einfach demontiert werden kann. Jeweils zwei Flanschringhälften greifen mit einem stufenförmigen Ring (6) hinterschneidend in eine, in den zu verbindenden Zylinder eingebrachte Ringnut (2) ein und werden mittels in der Trennfuge (9) zwischen Flanschringhälfte und Zylinder (1) angeordneten, auswechselbaren Zylinderstiften (11) sowohl radial als auch axial gehalten.

EP 0 101 753 A1

Unser Zeichen: 8102

Hannover, den 1. Juli 1982
by/zu    338

HERMANN BERSTORFF
Maschinenbau GmbH
An der Breiten Wiese 3/5

3000 Hannover 61

- 1 -

### Zylinderflanschverbindung
### für Schneckenpressen
==============================

Die Erfindung betrifft eine Zylinderflanschverbindung für Schneckenpressen gemäß des Oberbegriffes von Anspruch 1.

Aus der DE-OS 25 00 883 ist eine Zylinderflanschverbindung bekannt, bei der die Flanschringe auf die jeweiligen Zylinderenden aufgeschweißt werden. Nachteilig ist der zeitraubende Aufschweißvorgang, der zudem auch noch Wärmespannungen an den Zylinderenden verursacht und zu Materialverzug führen kann. Insbesondere ist nachteilig, daß eine derartige Verbindung nicht ohne Zerstörung der Schweißnaht gelöst werden kann.

Es ist die Aufgabe der Erfindung, eine Zylinderflanschverbindung zu schaffen, die keinen Schweißvorgang erfordert. Insbesondere ist es die Aufgabe der Erfindung, Flanschringe auf einem Zylinderende derart anzuordnen, daß zum einen damit eine äußerst einfache Verbindung zu einem weiteren, analog gestalteten Zylinderende ermöglicht wird und daß zum anderen der Flanschring verdrehsicher und trotzdem leicht lösbar auf dem Zylinderende angeordnet ist. Eine leichte Lösbarkeit der Flanschverbindung schafft eine schnelle Auswechselbarkeit einzelner evtl. beschädigter Zylinderabschnitte.

Die Aufgabe wird gelöst durch die in den kennzeichnenden Teilen der Ansprüche niedergelegten Merkmale.

Die Vorteile der Erfindung bestehen in erster Linie darin, mittels der in die Sacklochbohrungen eingesetzten Zylinderstifte eine Flanschverbindung geschaffen zu haben, bei der die aufgesetzten Flanschringe auf dem Zylinderende gehalten werden und zwar für eine schnelle Verbindung zum Gegenflanschring. Insbesondere wird jedoch erreicht, daß die Flanschringe ohne Verschweißung und Verschraubung völlig verdrehsicher auf dem Zylinderenden angeordnet sind, weil die Sacklochbohrung mittig in der Trennfuge zwischen Zylinderteil und Flanschring eingebracht ist.

Durch die Ausbildung eines stufenförmigen Ringes an dem Innendurchmesser des Flanschringes, der in eine in das Zylinderende eingebrachte Ringnut hinterschneidend eingreift, wird sichergestellt, daß große axiale Zugkräfte durch die Flanschschrauben auf die Flanschringe aufgebracht werden können, die wiederum auf die Flanschdichtung einwirken.

Die axiale Teilung des Flanschringes ermöglicht maßgeblich die schnelle Montage der Verbindung, da jeweils die Flanschringhälften in die Ringnut des Zylinders (einen Ring bildend) voreinander geschoben werden können, um sie danach mittels der Zylinderstifte auf dem Zylinderende zu arretieren.

Um zu vermeiden, daß sich die Flanschringhälften vom Zylinderende lösen, müssen jeweils mindestens zwei Zylinderstifte für eine Flanschringhälfte eingesetzt werden, wobei jeweils ein Stift auf jeder Seite der gedachten, radialen, senkrechten und mittigen Trennlinie der Flanschringhälfte angeordnet ist. Eine derartige Maßnahme ist erforderlich, um einen ausreichenden Hinterschnitt zur Halterung der

Flanschringhälfte zu garantieren. Würde man beispielsweise nur einen Stift in einer Bohrung in der Trennfuge vorsehen, so könnte man mühelos die Flanschringhälfte nach außen radial von dem Zylinderstift abziehen.

Erst durch die Anordnung von mindestens zwei Zylinderstiften in der Trennfuge wird ein Abziehen und ein Verdrehen der Flanschringhälften auf dem Zylinder vermieden.

Die Erfindung wird anhand einer Zeichnung näher erläutert. Es zeigen:

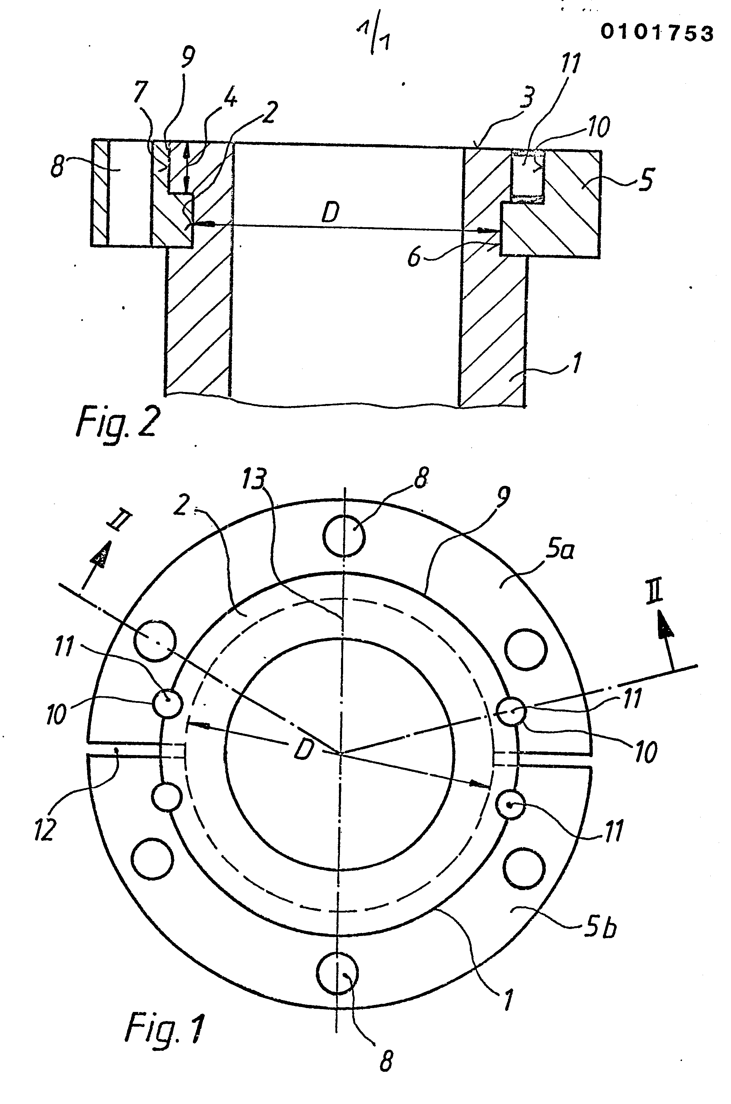

Fig. 1    einen Querschnitt durch eine Zylinderverbindung.

Fig. 2    einen Längsschnitt gemäß der Linie II-II in Fig. 1.

In Zylinder 1 ist eine Ringnut 2 eingedreht. Ringnut 2 befindet sich im Abstand 4 vom Zylinderende 3.

In Ringnut 2 wird ein Flanschring 5 eingesetzt, der aus zwei Hälften 5a und 5b besteht. Flanschring 5 besitzt an seinem Innendurchmesser D eine Abstufung bzw. einen angeformten, stufenförmigen Ring 6, der die gleiche axiale Breite aufweist wie die Ringnut 2 und der hinter dem verbleibenden Abstand 4 des Zylinders 1 hinterschneidend eingreift und mit Kante 7 auf dem Zylinder 1 aufliegt.

In den Flanschringhälften 5a und 5b sind Bohrungen 8 eingebracht für die Aufnahme der Flanschverbindungsschrauben.

In der Umfangstrennfuge 9 zwischen dem Flanschring 5 und dem Zylinderteil 1 sind Bohrungen 10 eingebracht für die Aufnahme von Zylinderstiften 11.

- 4 -

Flanschringhälften 5a und 5b werden von der Seite her, also radial, in die Ringnut 2 eingesetzt. Dann werden Zylinderstifte 11 in Sacklochbuhrungen 10 eingebracht, wodurch beiden Flanschringhälften

    a) mit dem Zylinder 1 verbunden sind, ohne verschweißt werden zu müssen,

    b) radial völlig verdrehsicher in der Ringnut 2 arretiert sind,

    c) jederzeit durch Herausziehen der Stifte leicht lösbar sind.

Um jeweils eine Flanschringhälfte 5a bzw. 5b in der Ringnut 2 zu befestigen, sind mindestens 2 Sacklochbohrungen 10 mit Zylinderstiften 11 erforderlich, wobei zwecks Erzielung eines möglichst großen Hinterschnittes für die Zylinderstifte 11 die Bohrungen in der Nähe der Trennlinie 12 zwischen den Flanschringhälften 5a und 5b angeordnet sein sollten.

Je nach Flanschverbindung können auch mehr als zwei Sacklochbohrungen 10 in der Umfangstrennfuge 9 angeordnet sein. Sacklochbohrungen 10 sind je zur Hälfte in der jeweiligen Flanschringhälfte und in dem Zylinderende 3 eingebracht.

Jeweils auf jeder Seite einer radialen Mittellinie 13 müssen mindestens eine Sacklochbohrung 10 mit Zylinderstiften 11 angeordnet sein, um ein Lösen einer Flanschringhälfte 5a bzw. 5b vom Zylinder 1 zu vermeiden, wobei, wie oben erwähnt, der größtmögliche Halt durch die Stifte 11 geschaffen wird, wenn sie in der Nähe der Trennlinie 12 angeordnet sind.

In den Zylinderstiften 11 kann ein zentrisches Gewinde eingebracht sein, in welches eine Schraube eingedreht wird, um die Stifte damit herausziehen zu können, falls die Flanschverbindung demontiert werden soll.

- 4a -

BEZUGSZEICHENLISTE
====================================

1 = Zylinder
2 = Ringnut
3 = Zylinderende
4 = Abstand
5 = Flanschring
5a = Flanschringhälfte
5b = Flanschringhälfte
6 = stufenförmiger Ring
7 = Kante
8 = Bohrungen für Verbindungsschrauben
9 = Umfangstrennfuge
10 = Sacklochbohrungen
11 = Zylinderstifte
12 = Trennlinie zwischen den Flanschringhälften
13 = radiale Mittellinie durch Flanschringhälften

0101753

Unser Zeichen: 8102          Hannover, den 1. Juli 1982
                             .by/zu   338

HERMANN BERSTORFF
Maschinenbau GmbH
An der Breiten Wiese 3/5

3000 Hannover 61


P A T E N T A N S P R Ü C H E
===================================

1. Zylinderflanschverbindung für Schneckenpressen
zum Entwässern von Flüssigkeitsfeststoffgemischen und zum Plastifizieren und Homogenisieren
von thermoplastischem Kunststoff und Kautschuk,

d a d u r c h   g e k e n n z e i c h n e t ,

daß in die zu verbindenden Zylinderteile (1) im
Abstand (4) von den Zylinderenden (3) jeweils
eine Ringnut (2) eingebracht ist,
daß ein Flanschring (5) mit einem, an seinem
Innendurchmesser und an der, der Flanschverbindungsstelle abgewandten Seite, angeformten, stufenförmigen Ring (6) hinterschneidend in die
Ringnut (2) eingreifend ausgebildet ist,
daß der Flanschring (5) axial mittig geteilt
ausgebildet ist, und
daß von der Flanschverbindungsseite her mittig
in die Umfangstrennfuge (9) zwischen Zylinderteil (1) und Flanschring (5) mindestens zwei
Sacklochbohrungen (10) pro axial geteilter
Flanschringhälfte (5a, 5b) eingebracht sind für die Aufnahme von Zylinderstiften (11).

2. Zylinderflanschverbindung nach Anspruch 1,

   d a d u r c h   g e k e n n z e i c h n e t ,

   daß die in die Zylinderenden (3) eingedrehte
   Ringnut (2) im Querschnitt rechteckig ausgebildet ist.

3. Zylinderflanschverbindung nach Anspruch 1,

   d a d u r c h   g e k e n n z e i c h n e t ,

   daß der Abstand (4) der eingedrehten Ringnut
   (2) von den Zylinderenden (3) etwa der halben
   axialen Dicke eines Flanschringes (5) entspricht.

4. Zylinderflanschverbindung nach Anspruch 1,

   d a d u r c h   g e k e n n z e i c h n e t ,

   daß jeweils zwei Sacklochbohrungen (10) in eine
   Flanschringhälfte (5a, 5b) eingebracht sind,
   und zwar jeweils eine auf jeder Seite der radialen Mittellinie (13).

Fig. 2

Fig. 1

0101753

1/1

0101753

**EUROPÄISCHER RECHERCHENBERICHT**

Nummer der Anmeldung

EP 82 10 7839

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | GB-A-2 073 836 (G. FISCHER AG) <br> * Figur 1 * | 1 | B 29 F 3/02 <br> B 29 F 3/01 <br> B 29 B 1/10 <br> B 30 B 11/22 <br> F 16 L 23/00 |
| | --- | | |
| A | DE-B-1 099 996 (WERNER & PFLEIDERER) <br> * Figur * | 1,4 | |
| | --- | | |
| A | WO-A-8 100 525 (MASTER PLAST AB) <br> * Figur 3 * | 1 | |
| | --- | | |
| A | FR-A-2 107 922 (S.P.A. LAVORAZIONE MATERIE PLASTICHE L.M.P.) <br> * Figur * | 1 | |
| | --- | | **RECHERCHIERTE SACHGEBIETE (Int. Cl. ³)** |
| D,A | DE-A-2 500 883 (H. BERSTORFF MASCHINENBAU GMBH) <br> * Figur * | 1 | |
| | --- | | B 29 B 1/00 <br> B 29 F 1/00 <br> B 29 F 3/00 <br> B 30 B 11/00 <br> F 16 L 23/00 |
| A | BE-A- 628 727 (STE APPAREILS GACHOT) <br> * Figur 1 * | 1 | |
| | --- | | |
| A | DE-C- 410 080 (A.E.G.) <br> * Figur 1 * | 1 | |
| | --- | | |
| A | DE-B-1 201 635 (A.A. POLLIA) <br> * Figur 1 * | 1 | |
| | ---     -/- | | |

Der vorliegende Recherchenbericht wurde für alle Patentansprüche erstellt.

| Recherchenort <br> BERLIN | Abschlußdatum der Recherche <br> 22-03-1983 | Prüfer <br> FINDELI B.F.C |
|---|---|---|

## EUROPÄISCHER RECHERCHENBERICHT

**Europäisches Patentamt**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-A-2 053 147  (VICTAULIC CO.) * Figur 6 * | 1 | |
| A | DE-U-6 604 174  (MANNESMANN AG) * Figur 1 * | 1 | |
| A | US-A-2 732 587  (E.S. GREENE) | | |
| A | GB-A-1 103 547  (DUNLOP RUBBER CO., LTD.) | | |

RECHERCHIERTE SACHGEBIETE (Int. Cl. ³)

Der vorliegende Recherchenbericht wurde für alle Patentansprüche erstellt.

| Recherchenort BERLIN | Abschlußdatum der Recherche 22-03-1983 | Prüfer FINDELI B.F.C |
|---|---|---|